Europäisches Patentamt

European Patent Office

Office européen des brevets

(19)

(11) Numéro de publication: **0 207 892**
**B1**

# (12) FASCICULE DE BREVET EUROPEEN

(45) Date de publication du fascicule du brevet:
**10.01.90**

(51) Int. Cl.⁴: **B 29 C 47/88**

(21) Numéro de dépôt: **86810268.2**

(22) Date de dépôt: **13.06.86**

(54) **Dispositif pour le refroidissement en continu d'un élément allongé.**

(30) Priorité: **05.07.85 CH 2904/85**

(43) Date de publication de la demande:
**07.01.87 Bulletin 87/2**

(45) Mention de la délivrance du brevet:
**10.01.90 Bulletin 90/2**

(84) Etats contractants désignés:
**AT BE CH DE FR GB IT LI NL SE**

(56) Documents cités:
**DE-C- 810 454**
**GB-A- 793 311**
**US-A- 2 230 283**
**US-A- 2 578 354**
**US-A- 2 833 571**
**US-A- 2 883 702**
**US-A- 2 991 501**
**US-A- 3 032 812**
**US-A- 3 277 656**
**US-A- 3 911 069**
**US-A- 4 090 828**

(73) Titulaire: **Maillefer S.A., Route du Bois,
CH-1024 Ecublens Canton de Vaud (CH)**

(72) Inventeur: **Giacometti, Osvaldo, La Coula,
CH-1111 Aclens (CH)**

(74) Mandataire: **Rochat, Daniel Jean et al, Bovard SA
Ingénieurs-conseils ACP Optingenstrasse 16,
CH-3000 Bern 25 (CH)**

ACTORUM AG

## Description

Dans les installations prévues pour l'extrusion en continu d'éléments allongés comme par exemple des tubes en matière plastique ou des gaines recouvrant des conducteurs électriques en cuivre de façon à assurer leur isolation on utilise des bacs de refroidissement de forme allongée, généralement en tôle qui sont placés tout près de la tête d'extrusion. Les parois antérieures et postérieures de ces bacs sont percées d'ouvertures par lesquelles l'élément allongé entre dans le bac et en sort. Lorsqu'il n'est pas nécessaire de prévoir des dispositifs de calibrage, il suffit que les ouvertures soient adaptées aux dimensions de la section de l'élément allongé afin d'éviter de trop grandes pertes d'eau par le jeu radial entre l'élément allongé et le bord de l'ouverture. Jusqu'à maintenant ces bacs comportaient simplement une enceinte étanche en tôle soudée ouverte à sa partie supérieure et dont les parois d'extrémité comportaient chacune une ouverture. L'enceinte était pourvue des raccords nécessaires pour les canalisations d'amenée d'eau et d'évacuation ainsi que le montage des galets ou des rouleaux de guidage placés dans le fond du bac afin de supporter l'élément allongé dans le cas où celui-ci était d'un diamètre relativement grand.

Cepedant, la commande électronique des installations d'extrusion permet à l'heure actuelle de passer très rapidement et très facilement de la production d'un élément de dimensions données à celle d'un élément ayant d'autres dimensions. Or, avec les bacs de construction traditionnelle, chaque fois que l'on met en route une ligne pour la fabrication d'un élément de dimensions données, par exemple d'un fil ou d'un câble, il faut faire passer celui-ci à travers les ouvertures d'entrée et de sortie du bac, après avoir, dans de nombreux cas, changé entièrement le bac lui-même pour que les dites ouvetures soient adaptées au nouveau diamètre.

Cette situation à conduit à rechercher une construction de bac qui tout en étant relativement simple puisse s'adapter facilment aux diamètres ou aux profils des différents éléments allongés, afin d'obtenir une simplification de la mise en route d'une ligne lors d'une modification des dimensions d'un élément.

Dans ce but, l'objet de la présente invention est un dispositif pour le refroidissement en continu d'un élément allongé en matière plastique, à la sortie d'une ligne de production, comprenant une enceinte allongée qui présente des parois d'extrémité conformées pour permettre le passage de l'élément allongé et capables de retenir un liquide contenu dans l'enceinte quand l'élément allongé est en place, caractérisé en ce que chaque paroi d'extrémité comporte un ensemble de portes, en ce que les différentes portes de chaque ensemble ont des ouvertures adaptés à différents profils d'éléments allongés, et en ce que les dites portes sont mobiles individuellement entre une position ouverte et une position fermée.

On va décrire ci-après à titre d'exemple une forme d'exécution du dispositif selon l'invention en se référant au dessin annexé, dont:

la fig. 1 est une vue en plan de dessus à échelle réduite,

la fig. 2 une vue en élévation frontale de l'extrémité côté entrée,

la fig. 3 une vue en coupe selon la ligne III-III de la fig. 2, et

la fig. 4 une vue partielle en perspective schématique montrant le pivotement d'un battant de porte et les moyens de retenue du radier.

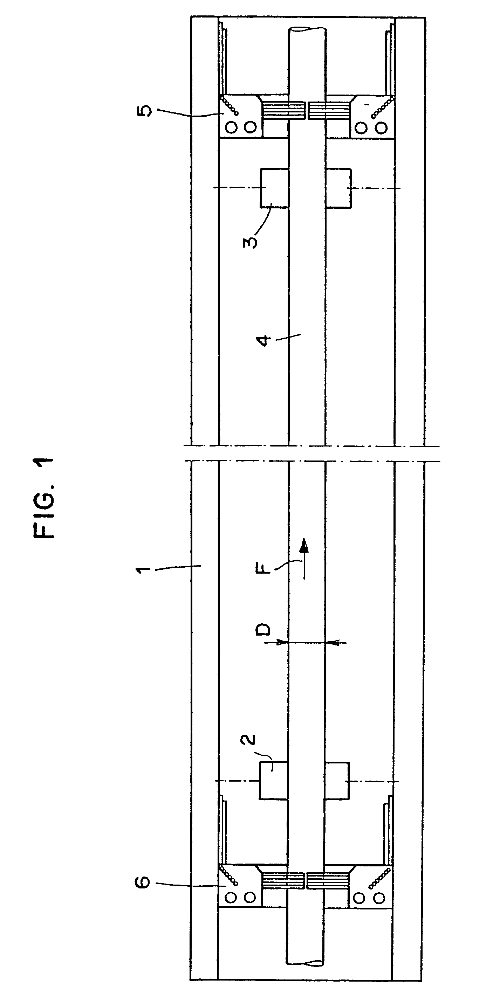

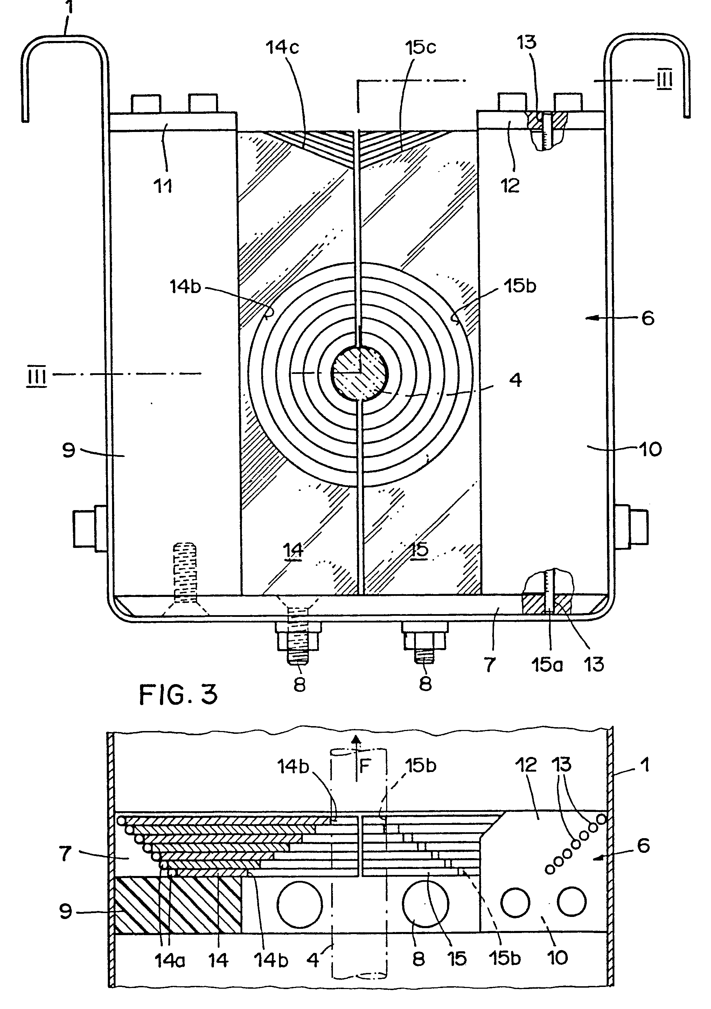

Le bac représenté à la fig. 1 comporte une enveloppe générale 1 consituée par une tôle pliée en forme de U comme on le voit également à la fig. 2. A l'intérieur de ce bac sont montés des rouleaux 2 et 3 qui pivotent autour d'axes horizontaux orientés transversalement par rapport à la direction du bac de façon à supporter un élément allongé 4 par exemple un câble électrique pourvu d'une isolation en matière plastique. Ce câble sort d'une tête d'extrusion (non représentée) dans laquelle la partie métallique est revêtue d'une couche de matière plastique isolante qui présente une section circulaire avec un diamètre prédéterminé D. A chacune de ses deux extrémités, le bac est fermé par une paroi qui comporte un ensemble de portes, ces ensembles étant désignés à la fig. 1 par 5 et 6. L'élément allongé 4 se déplace dans le sens de la flèche F de sorte que l'ensemble 6 représente l'ensemble d'entrée et l'ensemble 5 l'ensemble de sortie. Chaque ensemble de portes comporte un certain nombre de portes à deux battants et chaque battant pivote autour d'un axe vertical de façon à pouvoir s'ouvrir dans le sens de déplacement matérialisé par la flèche F. Chaque porte délimite une ouverture adaptée à une valeur particulière du diamètre D. Lorsque le bac est en service, un certain nombre des portes de chaque ensemble 5 ou 6 est en position fermée alors que les battants des autres portes sont en position ouverte, de sorte que l'élément allongé traverse un certain nombre de paires d'échancrures qui déterminent des cercles dont celui qui a le plus petit diamètre est ajusté au diamètre D.

Les fig. 2 et 3 montrent la paroi d'extrémité d'entrée avec l'ensemble de portes 6. Au pied de la paroi est disposé un radier 7 constitué par une plaque épaisse qui est fixée dans le fond du bac par des vis 8. Au voisinage des parois verticales de l'enveloppe 1, le radier 7 supporte deux piliers 9 et 10 de profil rectangulaire au sommet desquels sont fixées des consoles 11 et 12 constituées par des plaques planes s'étendant en porte-à-faux vers l'intérieur du bac à partir des piliers 9 et 10. Le radier 7 ainsi que les consoles 11 et 12 sont percés de trous 13 d'axes verticaux servant au pivotement des battants de portes comme on le verra plus loin. Dans la forme d'exécution décrite, l'ensemble 6 comporte sept portes constituée chacune de deux battants 14 et 15. Chaque battant 14 ou 15 se compose d'une plaque de tôle plane dont le bord extérieur est découpé avec un prolongement qui forme une tige de pivotement désignée par 14a ou 15a. Ces tiges s'étendent au delà de la hauteur du battant 14 ou 15 et leur diamètre est adapté aux trous 13. De plus, chaque battant 14 ou 15 présente dans son bord interne et au centre de sa hauteur une échancrure 14b ou 15b en forme de demi-cercle adaptée à un diamètre prédéterminé d'un élément allongé. Comme on le voit aux fig. 2 e 3, si l'on considère les paires de battants 14 et 15 constituant les sept portes successives prévues dans la forme d'exécution décrite, on voit que les échancrures 14b et 15b de chaque porte ont des diamètres décroissant de façon progressive depuis la première porte dont les battants sont situés tout près des piliers 9 et 10 jusqu'à la dernière qui est située à l'intérieur du bac. Ainsi, lorsque toutes les portes sont en position fermée, ce qui correspond à la disposition des fig. 2 et 3, l'élément allongé 4 susceptible de traverser le bac dans ces conditions, aura un diamètre minimum, ce diamètre étant ajusté à celui des échancrures 14b et 15b de la dernière des portes. En revanche, dans le cas ou l'élément allongé sera du diamètre maximum, toutes les portes sauf la première seront ouvertes.

Pour faciliter les opérations de mise en route tous les battants 14 et 15 présentent dans leur angle interne supérieur une découpure en biseau désignée par 14c et 15c de sorte que chaque battant peut ainsi être manoeuvré individuellement. Les trous de pivotement 13 pour les tiges 14a et 15a des battants de portes sont alignés selon deux lignes à 45° divergentes dans le sens de déplacement de l'élément allongé, de façon que chaque battant puisse pivoter d'un angle de 90° et que la position ouverte soit parallèle à l'axe du bac, alors que la position fermée est dirigée transversalement. Ainsi la largeur des battants est différente pour les différentes portes. En ce qui concerne l'ensemble 6, les battants de portes dont les échancrures ont le plus grand diamètre, sont ceux dont la largeur est la plus faible, alors que les battants de portes prévus pour la dimension minimale de l'élément allongé, c'est-à-dire ayant les échancrures 14b et 15b de diamètre le plus petit sont ceux qui sont le plus large. La disposition de l'ensemble de portes 5 sera exactement semblable, avec cette différence que les battants de portes sont situés du côté extérieur du radier et s'ouvrent vers l'extérieur, alors que la disposition de l'ensemble de portes 6 est telle que les battants de portes s'ouvrent vers l'intérieur du bac.

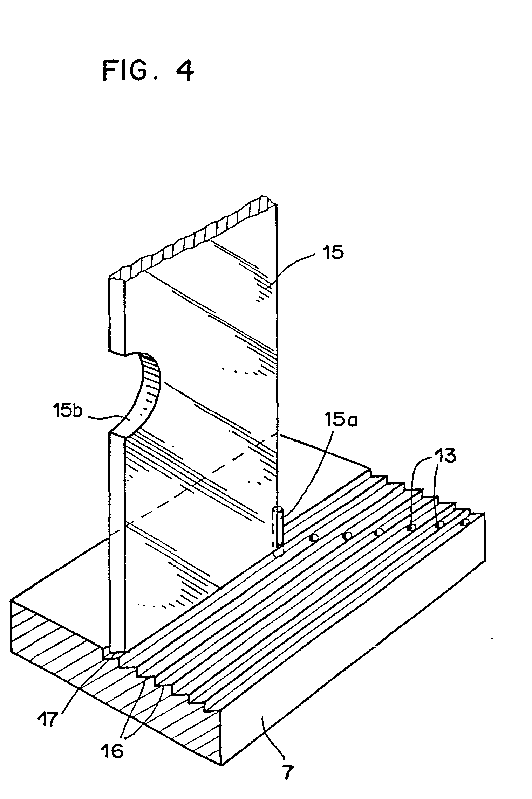

Pour que les ensembles de portes décrits remplissent le rôle d'éléments de sécurité qui leur est attribué, il est encore nécessaire de prévoir des moyens de retenue des portes en position fermée et ceux-ci sont représentés à la fig. 4. En effet, lorsque le bac a été agencé de façon à permettre le passage d'un élément allongé de diamètre prédéterminé, il faut que celles des portes qui sont en position fermée assurent la retenue de la masse d'eau qui remplit le bac mais que la porte dont les échancrures correspondent au diamètre de l'élément allongé puisse s'ouvrir facilement au cas où, par suite d'une irrégularité, la surface extérieure de l'élément allongé présenterait une surépaisseur local susceptible de s'accrocher à l'échancrure de la porte. En effet, si dans ce cas la porte reste fixe, il peut en résulter une déchirure de grande longueur sur l'élément allongé alors que, si la porte montée pivotante peut s'ouvrir facilement un tel inconvénient est évité. C'est la raison pour laquelle dans la constuction décrite les portes ne sont pas verrouillées en position fermée, mais sont simplement retenues en place par les moyens représentés à la fig. 4. Ces moyens consistent, comme on le voit, en un jeu de gorges ou de rainures parallèles 16 ménagées dans la surface supérieure du radier 7 dans le sens transversal. La largeur de ces rainures correspond à l'épaisseur des battants de portes 14 et 15 et leur profil est un profil en dents de scie dont le flanc vertical est situé du côté opposé au sens d'ouverture de la porte. De plus, la hauteur de chacun des battants 14 et 15 est légèrement inférieure à la hauteur des piliers 9 et 10 et par conséquent à la distance entre les faces opposées du radier 7 et des consoles 11 et 12. Les tiges 14a et 15a qui assurent le pivotement des battants de porte présentent donc un certain jeu dans le sens axial et ce jeu correspond à la profondeur des gorges 16 du radier. Lorsqu'un choc se produit pour les raisons indiquées précédemment, le battant de porte dont l'échancrure est adaptée à l'élément allongé qu'il s'agit de traîter, peut donc se soulever légèrement. Pour cela, son bord inférieur présente un biseau 17 qui permet l'ouverture du battant sous l'effet du choc reçu.

Ainsi, non seulement la construction décrite permet d'utiliser le même bac pour des éléments allongés de diamètres différents, mais de plus la mise en place de l'élément allongé, c'est-à-dire la mise en route de la ligne, se fait d'une façon extrêmement simple, puisque les portes étant en position ouverte l'élément allongé peut être introduit dans le bac de haut en bas par un déplacement en translation sans qu'il soit nécessaire de l'engager successivement dans les deux ouvertures d'entrée et de sortie. Une fois l'élément allongé mis en place et reposant sur les rouleaux 2 et 3, on peut fermer les portes dont les échancrures ont un diamètre plus grand que son diamètre propre et cela jusqu'à la porte qui lui est exactement adaptée, les autres portes restant en position ouverte. Ceci fait, le bac peut être rempli d'eau et la ligne mise en route. Finalement, comme on l'a rappelé plus haut, la construction décrite offre encore l'avantage de sécurité dû au fait que, en cas de choc par un bossage ou une saillie de l'élément allongé sur l'échancrure qu'il traverse, le battant correspondant peut s'ouvrir spontanément et éviter des dégats à la gaine du câble, à l'enrobage du fil ou au tube en matière plastique qui sort de la tête d'extrusion.

Pour l'ensemble 6, la pression de l'eau s'exerce dans le sens de la fermeture des portes, de sorte que les battants 14 et 15 sont appuyés les uns contre les autres, les battants extrêmes étant appuyés contre les piliers 9 et 10. En revanche, pour l'ensemble 5 la pression de l'eau agit dans le sens de l'ouverture. Les moyens de retenue 16 e 17 devront être agencés, à cet endroit, d'une manière telle qu'ils offrent la sécurité nécessaire contre une ouverture intempestive, tout en réalisant l'ouverture en cas de choc. De façon générale, la construction décrite est celle d'une écluse et il ne sera pas nécessarie que la fermeture des parois d'étanchéité sur l'élément allongé présente une étanchéité absolue. Les extrémités du bac pourront comporter des réceptacles et des collecteurs pour récupérer les fuites éventuelles. D'autre part, dans le cas où les éléments allongés ont un profil non circulaire, les ensembles de porte seront munis d'échancrures ayant un profil approprié. Dans d'autres formes d'exécution le système de portes du dispositif pourrait aussi être différent de celui qui a été représenté au dessin, tout en comportant des portes pouvant s'ouvrir et se fermer indviduellement et adaptées chacune à un profil particulier d'un élément allongé.

**Revendications**

1. Dispositif pour le refroidissement en continu d'un élément allongé (4) en matière plastique, à la sortie d'une ligne de production, comprenant une enceinte allongée qui présente des parois d'extrémité conformées pour permettre le passage de l'élément allongé et capables de retenir un liquide contenu dans l'enceinte quand l'élément est en place, caractérisé en ce que chaque paroi d'extrémité comporte un ensemble (5, 6) de portes, en ce que les différentes portes de chaque ensemble ont des ouvertures adaptés à différents profils d'éléments allongés, et en ce que les dites portes sont mobiles individuellement entre une position ouverte et une position fermée.

2. Dispositif selon la revendication 1, caractérisé en ce que chaque porte comporte deux battants (14, 15) pivotants et symétriques présentant chacune, dans son bord interne une échancrure (14b, 15b) dont la forme correspond au profil d'une moitié de la section d'un élément allongé.

3. Dispositif selon la revendication 2, caractérisé en ce que les deux battants (14, 15) de chaque porte pivotent autour d'axes verticaux.

4. Dispositif selon la revendication 3, caractérisé par des moyens de retenue (16, 17) maintenant les battants (14, 15) des portes en position fermée tout en permettant leur ouverture sous l'effet d'un choc exercé par une partie de l'élément allongé (4) contre le bord d'une échancrure.

5. Dispositif selon la revendication 4, caractérisé en ce qu'à chaque ensemble (5, 6) de portes est associé un radier (7) et en ce que les dits moyens de retenue (16, 17) son associés au radier.

6. Dispositif selon la revendication 5, caractérisé en ce que les dits moyens de retenue (16, 17) sont constitués par des gorges parallèles rectilignes ménagées dans le radier (7) et dans lesquelles les battants (14, 15) s'engagent lorsqu'ils sont en position fermée.

7. Dispositif selon la revendication 6, caractérisé en ce que le profil des gorges est en dent de scie et en ce que les battants présentent sur leurs bords inférieurs un biseau correspondant à ces gorges.

8. Dispositif selon la revendication 7, caractérisé en ce que les battants sont montés entre le radier (7) et une console (11, 12) située à la partie supérieure du bac de manière à pouvoir pivoter avec un jeu axiale entre ces deux éléments.

9. Dispositif selon la revendication 7, caractérisé en ce que les axes de pivotement des battants (14, 15) sont décalés les uns par rapport aux autres dans le sens de l'axe du bac et dans le sens latéral.

**Patentansprüche**

1. Vorrichtung zum kontinuierlichen Kühlen von strangförmigem Gut (4) aus Plastikmaterial am Ausgang einer Fertingungslinie, wobei eine längliche Kammer vorhanden ist, welche Stirnwände aufweist, die so geformt sind, dass sie den Durchgang des strangförmigen Gutes ermöglichen und zum Aufhalten von in der Kammer enthaltener Flüssigkeit geeignet sind, wenn das strangsförmige Gut in der Kammer positioniert ist, dadurch gekennzeichnet, dass jede Stirnwand einen Satz von Türen (5, 6) aufweist, dass die verschiedenen Türen jedes Satzes an die verschiedenen Profile des strangförmigen Gutes angepasste Öffnungen haben und dass die besagten Türen zwischen einer geöffneten und einer geschlossenen Position einzeln beweglich sind.

2. Vorrichtung nach Anspruch 1, dadurch gekennzeichnet, dass jede Tür zwei schwenkbare und zueinander symmetrische Türflügel (14, 15) aufweist, wobei jeweils an der Innenseite eine bogenförmige Aussparung (14b, 15b) vorhanden ist, deren Form dem Profil einer Querschnittshälfte des Stranggutes entspricht.

3. Vorrichtung nach Anspruch 2, dadurch gekennzeichnet, dass die zwei Flügel (14, 15) jeder Tür um vertikale Achsen schwenkbar sind.

4. Vorrichtung nach Anspruch 3, dadurch gekennzeichnet, dass rückhaltende Mittel (16, 17) die Türflügel (14, 15) der Türen in der geschlossenen Position halten, während das Öffnen der Türflügel unter dem Einfluss eines von einem Teil des strangförmigen Gutes (4) gegen die Fläche einer bogenförmige Aussparung ausgeübten Stosses ermöglicht wird.

5. Vorrichtung nach Anspruch 4, dadurch gekennzeichnet, dass jeder Satz von Türen (5, 6) eine Sohle (7) umfasst, und dass sich die besagten rückhaltenden Mittel (16, 17) an der Sohle befinden.

6. Vorrichtung nach Anspruch 5, dadurch gekennzeichnet, dass die besagten rückhaltenden Mittel (16, 17) durch in der Sohle (7) vorhandene parallele geradlinige Rillen gebildet werden, in welche die Türflügel (14, 15) eingreifen, sobald sie sich in der geschlossenen Position befinden.

7. Vorrichtung nach Anspruch 6, dadurch gekennzeichnet, dass das Profil der Rillen ein Sägezahnprofil ist und dass die Türflügel an ihrer unteren Fläche eine diesen Rillen entsprechende Schräge aufweisen.

8. Vorrichtung nach Anspruch 7, dadurch gekennzeichnet, dass die Türflügel zwischen der Sohle (7) und einer im oberen Bereich des Behälters vorhandenen Konsole (11, 12) derart angebracht sind, dass die mit einem axialen Spiel zwischen diesen beiden Elementen schwenkbar sind.

9. Vorrichtung nach Anspruch 7, dadurch gekennzeichnet, dass die Schwenkachsen der Türflügel (14, 15) gegeneinander versetzt sind im Hinblick auf die Behälterachse und quer dazu.

**Claims**

1. Device for the continuous cooling of an elongated element (4) of plastics material, at the exit of a production line, including an elongated enclosure which has end walls formed for permitting the passage of the elongated element and capable of retaining a liquid contained in the enclosure when the elongated element is in place, characterized in that each end wall comprises a set (5, 6) of gates, in that the different gates of each set have openings adapted to different profiles of elongated elements, and in that the said gates are individually movable between an open position and a closed position.

2. Device according to claim 1, characterized in that each gate comprises two pivoting and symmetrical flaps (14, 15), each having in its inner edge a notch (14b, 15b), the shape of which matches the profile of one-half of the cross-section of an elongated element.

3. Device according to claim 2, characterized in that the two flaps (14, 15) of each gate pivot about vertical axes.

4. Device according to claim 3, characterized by retaining means (16, 17) keeping the flaps (14, 15) of the gates in closed position while permitting their opening under the influence of a shock exerted by part of the elongated element (4) against the edge of a notch.

5. Device according to claim 4, characterized in that a bed (7) is associated with each set (5, 6) of gates, and in that the said retaining means (16, 17) are associated with the bed.

6. Device according to claim 5, characterized in that the said retaining means (16, 17) are composed of straight, parallel grooves contrived in the bed (7) and in which the flaps (14, 15) fit when they are in closed position.

7. Device according to claim 6, characterized in that the profile of the grooves is saw-toothed, and in that the flaps have on their lower edges a bevel matching these grooves.

8. Device according to claim 7, characterized in that the flaps are mounted between the bed (7) and a bracket (11, 12) stituated at the top part of the vat so as to be able to pivot with axial play between these two elements.

9. Device according to claim 7, characterized in that the pivoting axes of the flaps (14, 15) are shifted relative to one another in the direction of the axis of the vat and in lateral direction.

# FIG. 1

EP 0 207 892 B1

FIG. 3

## FIG. 4